## Europäisches Patentamt

## European Patent Office

## Office européen des brevets

(19)

(11) Veröffentlichungsnummer: **0 006 921**
**B1**

(12) # EUROPÄISCHE PATENTSCHRIFT

(45) Veröffentlichungstag der Patentschrift:
**11.07.84**

(21) Anmeldenummer: **78900139.3**

(22) Anmeldetag: **04.10.78**

(86) Internationale Anmeldenummer:
**PCT/EP 78/00016**

(87) Internationale Veröffentlichungsnummer:
**WO 79/00178 (05.04.79 Gazette 79/7)**

(51) Int. Cl.³: **C 01 B 31/36, C 04 B 35/56**

(54) **VERFAHREN ZUR HERSTELLUNG VON SILICIUMCARBIDPULVER.**

(30) Priorität: **04.10.77 DE 2744636**

(43) Veröffentlichungstag der Anmeldung:
**23.01.80 Patentblatt 80/2**

(45) Bekanntmachung des Hinweises auf die Patenterteilung:
**11.07.84 Patentblatt 84/28**

(84) Benannte Vertragsstaaten:
**CH DE FR GB SE**

(56) Entgegenhaltungen:
**CH - A - 472 337**
**FR - A - 1 269 376**
**FR - A - 2 249 052**
**FR - A - 2 272 032**
**FR - A - 2 313 331**
**FR - A - 2 316 028**
**GB - A - 1 174 859**

**Industrial and Engineering Chemistry; Prod. Res. Develop., Vol; 11, No. 2, 1972, American Chemical Society, Washington, R.M. Salinger, "Preparation of silicon carbide from methylchlorosilane in a plasma torch",siehe Seite 230-231**

(73) Patentinhaber: **KENNECOTT CORPORATION, Ten Stamford Forum, Stamford Connecticut 06905 (US)**

(72) Erfinder: **BÖCKER, Wolfgang, Dietrich, Georg, Wichmannstrasse 24, Berlin 30 (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

## Beschreibung

Die Erfindung bezieht sich auf ein Verfahren zum Herstellen von Siliciumcarbidpulver, bei welchem Alkylsilane in den Gaszustand überführt und anschliessend bei Temperaturen von mehr als 450°C thermisch gespalten werden.

Es ist ein Verfahren gemäss dem Oberbegriff des Patentanspruchs 1 bekannt (FR-A-1269376), bei welchem durch Überführung der Alkylsilane in den Gaszustand und anschliessende thermische Spaltung bei 700 bis 2500°C in einem Strömungsreaktor grobkörnige Siliciumkristalle hergestellt werden.

Dieses bekannte Verfahren zielt auf die Ausbildung von Einkristallen ab, die als Folge einer Wandreaktion durch Aufwachsen von Kristalliten auf einem Substrat ausgebildet werden.

Wegen ihrer Grobkörnigkeit sind die mit Hilfe des bekannten Verfahrens hergestellten Siliciumcarbidkristalle nicht zum Herstellen von Formkörpern mit relativ komplizierter Gestalt geeignet. Für kompliziert gestaltete Formkörper aus Sinterkeramik werden Siliciumcarbidkristalle mit möglichst kleiner Teilchengrösse im Bereich von 0,02 bis 1 mm bevorzugt, die sich durch eine grosse spezifische Oberfläche auszeichnen.

Aus der FR-A-2272032 ist es bekannt, im Plasmabrenner und bei turbulenter Strömungsgeschwindigkeit Siliciumcarbidkristalle im Submikronbereich durch thermische Spaltung von Alkylhalogensilanen zu erzeugen.

Dieses Verfahren hat einen ziemlich niedrigen Wirkungsgrad und führt zu schädlichen Nebenprodukten, wie dem äusserst gefährlichen Chlorwasserstoffgas.

Ferner fallen bei dem bekannten Verfahren lediglich kubische Siliciumcarbidkristalle an, die jedoch eine geringere Sinteraktivität aufweisen, als röntgenamorphes Siliciumcarbidpulver.

Aus der GB-A-1174859 ist ein Verfahren zum Herstellen von pigmentiertem Siliciumcarbid bekannt, bei welchem Organosiliciumverbindungen thermisch zersetzt werden und durch Abschirmung der Reaktorwände mittels einer Gasspülung dem Ausbilden grosser Carbidteilchen vorgebeugt wird.

Die Erfindung, wie sie in den Ansprüchen gekennzeichnet ist, löst die Aufgabe, ein Verfahren der aus der FR-A-1269376 bekannten Gattung so auszubilden, dass das Herstellen von Siliciumcarbidpulver im Submikronbereich mit besonders hoher Sinteraktivität ermöglicht wird.

Die mit Hilfe der Erfindung erzielbaren Vorteile sind im wesentlichen darin zu sehen, dass durch Verwendung der im Anspruch 1 angegebenen Alkylsilane die Bildung gefährlicher Nebenprodukte vermieden wird und dass durch geeignete Wahl von Zersetzungstemperatur und Verweildauer im Strömungsreaktor amorphe oder zumindest teilamorphe Siliciumcarbidpulver hergestellt werden können, welche sich durch eine besonders hohe Sinteraktivität und besonders hohe Feinkörnigkeit auszeichnen. Beim Verfahren nach der Erfindung läuft die Siliciumcarbidbildung als homogene Gasphasenreaktion ab, so dass die zum unerwünschten Kornwachstum führenden Wandreaktionen praktisch vollständig vermieden werden können.

Die dem gebildeten Pulver zugefügten Sinterzusätze $SiB_4$, $SiB_6$, $B_{14}$ Si sowie $B_{12}$ (C, Si, B)$_3$ üben einen besonders vorteilhaften Einfluss auf die Qualität der hergestellten sinterkeramischen Körper aus.

Ferner sei unterstrichen, dass beim erfindungsgemässen Verfahren die angestrebte Feinkörnigkeit des gebildeten Siliciumcarbidpulvers ohne Zwangsspülung der Reaktorinnenwand, wie aus der GB-A-1 174 859 bekannt, erzielt wird.

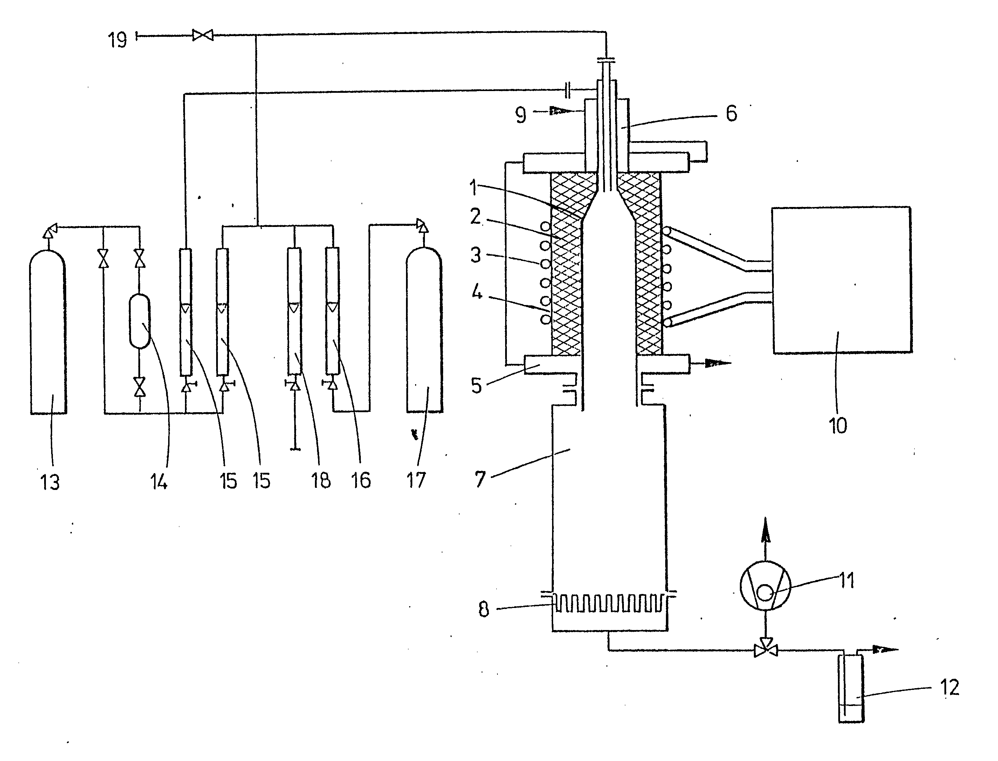

Im folgenden wird die Erfindung unter Bezug auf die lediglich einen Ausführungsweg darstellende Zeichnung näher erläutert. Die Figur zeigt:

eine schematische Darstellung einer Apparatur zum Durchführen des erfindungsgemässen Verfahrens.

Bevorzugt werden beim erfindungsgemässen Verfahren die Methyl- und Äthylsilane, wie Monomethylsilan, Dimethylsilan, Monoäthylsilan, Diäthylsilan, Äthyl-methylsilan oder Gemische dieser Alkylsilane, verwendet.

Die Alkylsilane lassen sich z.B. aus den grosstechnisch verwendeten halogen-substituierten Alkylsilanen (z.B. Methyltrichlorsilan), wie sie als Zwischenprodukte bei der Herstellung von Silikonen dienen, durch Reduktion mit Lithiumaluminiumhydrid oder Natriumhydrid mit einer Ausbeute von über 90% gewinnen.

Unter Sauerstoffabschluss zeigen die Alkylsilane allgemein eine relativ hohe thermische Stabilität. Erst bei Temperaturen zwischen 400 und 500°C tritt eine Zersetzung in feste und gasförmige Spaltungsprodukte auf. Diese bei niedrigen Temperaturen entstehenden, meist leuchtend gelben, festen Spaltunsprodukte der Zusammensetzung (SiC H$_3$)$_x$ lassen sich durch Nachglühen bei höheren Temperaturen, in der Regel oberhalb 1000°C, in einer inerten Atmosphäre oder im Vakuum in reines, kubisches Siliciumcarbidpulver von hellgelber Farbe überführen.

Das erfindungsgemässe Verfahren wird bei Temperaturen im Bereich von 450°C bis zu einer Temperatur, wie sie im Plasmabrenner auftritt, durchgeführt. Normalerweise wird das erfindungsgemässe Verfahren bei Temperaturen im Bereich von 450 bis 2000°C durchgeführt. Im Plasmabrenner treten im allgemeinen Temperaturen auf, die über 3000°C oder noch wesentlich darüber liegen. Das erfindungsgemässe Verfahren kann grundsätzlich auch bei Temperaturen im Bereich von 2000 bis 3000°C durchgeführt werden. Bevorzugt wird es bei Temperaturen von 1000 bis 2000°C, am meisten bevorzugt bei Temperaturen von 1600 bis 2000°C, durchgeführt. Die thermische Spaltung von Methylsilan läuft beispielsweise unter Freisetzung von Wasserstoff etwa in den folgenden Stufen ab:

$CH_3SiH_3$ 440° (SiCH$_3$)$_x$ oder [H$_2$C-SiH$_2$]$_x$
850 – 950°C ß-SiC

Die im Temperaturbereich von etwa 450 bis 1000°C hergestellten Pulver lassen sich durch Nachglühen, z. B. bei 1600°C, in reines ß-SiC überführen. Die besten Sinterergebnisse werden jedoch mit Pulvern erzielt, die oberhalb von 1600°C hergestellt wurden und direkt ohne Nachglühen zum Sintern mit Zusätzen verwendet werden können. Die chemische Analyse zeigt bei Pulvern mit Abscheidetemperaturen von 1000 bis 1500°C einen geringen Überschuss an Silicium, der mit steigender Temperatur abnimmt. Ein Siliciumüberschuss wirkt sich jedoch stark hemmend auf das Sinterverhalten aus. Durch nachträgliche Glühung dieser Pulver oberhalb des Schmelzpunktes von Silicium, d. h. 1410°C, lässt sich dieser Überschuss durch Verdampfung aufgrund der hohen Oberfläche der Pulver entfernen.

Erfindungsgemäss wird daher das Pulver, das im unteren Temperaturbereich, z. B. bei einer Temperatur von 450 bis 1500°C, hergestellt wurde, anschliessend einer nachträglichen Glühbehandlung bei erhöhter Temperatur, d. h. bei einer Temperatur im Bereich von 1400 bis 2000°C, in inerter Atmosphäre oder im Vakuum unterworfen. Man erhält so das gewünschte Sintermaterial. Es war überraschend und hat nicht nahegelegen, dass man durch diese Glühbehandlung ein Sintermaterial mit kleiner Teilchengrösse erhält. Bei Kenntnis des Standes der Technik hätte der Fachmann erwarten müssen, dass durch eine solche Glühbehandlung ein grobkristallines Carbid gebildet wird.

Die Alkylsilane werden zusammen mit einem inerten Trägergas, wie Edelgasen z. B. Argon oder Helium, mit Stickstoff oder Wasserstoff oder Gemischen dieser Gase thermisch zersetzt. Die Zersetzung kann im Vakuum, bei Normaldruck oder bei Überdruck erfolgen, und das Verhältnis von Volumeneinheit an gasförmigem Alkylsilan zu Volumeneinheit an Träger- bzw. Inertgas kann innerhalb grosser Bereich variieren. Man kann dem Alkylsilan das Trägergas beimischen, z. B. in einem Volumenverhältnis von 1:1 bis 1:10. Diese Grenzen sind nicht kritisch und können gegebenenfalls über- oder unterschritten werden. Aus Wirtschaftlichkeitsgründen wird es jedoch weniger bevorzugt sein, zu grosse Mengen an Trägergas bei dem erfindungsgemässen Verfahren mitzuverwenden.

Bei dem erfindungsgemässen Verfahren wird das Alkylsilan mit dem Trägergas in einen Rohrreaktor geleitet und in dem Rohrreaktor thermisch zersetzt. Die Verweilzeit in dem Rohrreaktor ist extrem kurz. Überraschenderweise wurde gefunden, dass Verweilzeiten im Bereich von 1 bis 5 sec ausreichen, um die gewünschte thermische Spaltung zu ergeben. Bei höheren Temperaturen können die Verweilzeiten auch unter 1 sec liegen, und im Plasmabrenner können Verweilzeiten von $10^{-1}$ sec auftreten.

Die Vorteile des erfindungsgemässen Verfahren zur Pulverherstellung liegen in einer fast 100%igen Ausbeute an Siliciumcarbid und einer breiten Beeinflussungsmöglichkeit der Teilchengrösse, der spezifischen Oberfläche und der Kristallitgrösse durch Variation der Strömungsparameter und der Abscheidungstemperatur.

Die spezifische Oberfläche lässt sich durch Erhöhung der Strömungsgeschwindigkeit etwa im Bereich von 5 bis 100 $m^2/g$ variieren. Überraschenderweise erhält man bei dem erfindungsgemässen Verfahren Teilchen mit gleichmässig enger Teilchengrössenverteilung. Die Teilchen sind sphärisch und besitzen eine Grösse im Bereich von < 0,1 bis 1µm. Die Grösse hängt, ebenso wie die spezifische Oberfläche, von den Abschneidungsbedingungen ab.

Die bei niedrigen Ausscheidungstemperaturen anfallenden Pulver erweisen sich als röntgenamorph; erst oberhalb von etwa 1100°C werden die Röntgenreflexe des kubischen Siliciumcarbids sichtbar. Die durch Berechnung aus der Röntgenlinienverbreitung ermittelten Kristallitgrössen liegen im Bereich von etwa 50 bis 200 Å.

Die Pulver besitzen eine hohe Reinheit, wobei Durchschnittswerte von metallischen Verunreinigungen unter 100 ppm (parts per million) erreicht werden. Der Sauerstoffgehalt der Pulver kann bei entsprechender Vorreinigung der Trägerphase auf Werte von 400 bis 1000 ppm; z. B. 700 ppm reduziert werden. Dem gebildeten Siliciumcarbid können die üblichen Sinterzusätze, wie Bor und $B_4C$ zugesetzt werden. Erfindungsgemäss wird dem Siliciumcarbidpulver als Sinterzusatz wenigstens einer der Stoffe

$SiB_4$
$SiB_6$
$B_{12}(C, Si, B)_3$
$B_{14}Si$

zugesetzt. Diese Verbindungen wurden in der Vergangenheit als Sinterzusätze zu Siliciumcarbidpulver noch nicht verwendet.

Erst durch das Glühen bzw. Sintern bei höheren Temperaturen (1800 bis 2000°C) können Siliciumborverbindungen dieser Art entstehen. Überraschenderweise wurde gefunden, dass es möglich ist, diese Vebindungen direkt als Sinterhilfsmittel anstelle von B oder $B_4C$ zuzusetzen und dass es durch die direkte Zugabe dieser Verbindungen möglich wird, die Sinterzusätze besser zu dosieren.

Bei der Herstellung von Sinterkörpern kann man dem Siliciumcarbidpulver bor- und kohlenstoffhaltige Sinterzusätze in solchen Mengen zugeben, dass im Formkörper ein Borgehalt zwischen 0,3 bis 3 Gew.-% und ein Kohlenstoffgehalt zwischen 0,3 und 3 Gew.-% vorliegt.

Wie in der Zeichnung dargestellt, befindet sich ein Graphitrohr 1 mit konischem Einlass in einem Kieselglasrohr 4. Mehrere Schichten aus Graphitfilz 2 sorgen für eine thermische Isolation. Das Graphitrohr wird auf einer Länge, die etwa doppelt so gross wie der Innendurchmesser ist, von aussen über eine Induktionsspule 3 mit einem Hochfrequenzgenerator 10 beheizt. Das Kieselglasrohr trägt an beiden Enden wassergekühlte Flansche 5. Im oberen Kühlflansch befindet sich das ebenfalls wassergekühlte Gaseinleitungssystem 6, das aus einer Zentraldüse für das Reaktionsgas bzw. das inerte Verdünnungsgas und einer Ringspaltdüse für das Inertgas besteht und in dem konischen Teil des Graphitrohrs mündet.

Nach dem Durchströmen der beheizten Reaktionszone gelangt das durch die Silanspaltung entstehende, sehr feinteilig anfallende Silanspaltung entstehende, sehr feinteilig anfallende Siliciumcarbidpulver in die am unteren Ende des Kieselglasrohrs mit dem Kühlflansch 5 angebrachte Abscheidekammer 7, die mit einem Mikrogewebefilter 8 versehen ist. Das Gaseinleitungssystem und die beiden Kühlflansche sind in einem Kühlwasserkreis 9 hintereinandergeschaltet. Die ganze Versuchsanlage lässt sich über eine Drehschieberpumpe 11 evakuieren und ist gegen die Atmosphäre durch eine Waschflasche 12 mit einer Sperrflüssigkeit verschlossen. Die Gaszuführung des Alkylsilans erfogt aus der Gasflasche 17 über einen regulierbaren Strömungsmesser 16 in die Zentraldüse. Die Gaszuführung des inerten Verdünnungsgases erfolgt aus der Gasflasche 13 unter Durchströmen eines Sauerstoffabsorbers 14 über zwei einstellbare Strömungsmesser 15 in die Ringdüse bzw. zur Verdünnung des Silans zusätzlich in die Zentraldüse.

Eine Reaktion des Alkylsilans mit der Graphitwand ist bei dieser Versuchsanlage nicht zu beobachten.

Der induktiv beheizte Graphitreaktor kann natürlich auch direkt widerstandsbeheizt oder indirekt durch Strahlungswärme beheizt werden.

Für die simultane Abscheinung von Sinterzusätzen sind weiter zwei Einleitungen vorgesehen. Kohlenwasserstoffe zur Abscheidung von zusätzlichem Kohlenstoff werden über den Strömungsmesser 18 eingeleitet, für Borverbindungen dient eine weitere Einleitung 19.

Die folgenden Beispiele erläurern die erfindung. Die in den Beispielen aufgeführten relativen Dichten beziehen sich auf die Dichte von reinem SiC, e = 3,21 g/cm³.

Beispiel 1 bis 7 (ohne Sinterzusatz)

In die in der Zeichnung schematisch dargestellte Vorrichtung werden Methylsilan als Reaktonsgruppe und Argon als Inertgas unter Atmosphärendruck zusammen eingeleitet. Die mittlere Verweilzeit der Gase in der Heizzone beträgt etwa 1 sec. Das Methylsilan wird bei unterschiedlichen Temperaturen zersetzt.

In der folgenden Tabelle sind die durchgeführten Versuche zusammen mit den verwendeten Volumenströmen bezogen auf 20°C Einleitungstemperatur, aufgeführt sowie die dabei erhaltenen Ausbeuten. Es werden weiterhin die spezifische Oberfläche und der Sauerstoffgehalt des erhaltenen Produktes angegeben.

Tabelle 1

| Beispiel Nr. | Abscheide- temperatur (°C) | Methylsilan- volumen- strom (1/h) | Trägergas- strom (1/h) | Ringdüsen- strom (1/h) | Siliciumcarbid- ausbeute (%) | Spez. Oberflä- che (m²/g) | Sauerstoffgehalt (Gew.-%) |
|---|---|---|---|---|---|---|---|
| 1 | 800 | 2 | 18 | – | 58 | 46,6 | nicht bestimmt |
| 2 | 1000 | 4 | 4 | 100 | 82 | 15,3 | nicht bestimmt |
| 3 | 1200 | 2 | 6 | 30 | 88 | 18,1 | nicht bestimmt |
| 4 | 1400 | 4 | 4 | 32 | 90,1 | 16,7 | 0,35 |
| 5 | 1600 | 4 | 4 | 12 | 95,7 | 17,4 | 0,05 |
| 6 | 1800 | 4 | 8 | 28 | 97,5 | 24,1 | 0,07 |

Beispiel 7

5 g des röntgenamorphen, hellbraunen Pulvers aus Beispiel 1 wurden 1 h im Vakuum bei 1400°C in einem Graphittiegel geglüht. Das thermisch nachbehandelte Pulver zeigte röntgenographisch ein starkes Kristallitwachstum der kubischen Siliciumcarbidphase, besass eine hellgelbe Farbe und hatte ein spezifische Oberfläche von 31,5 m²/g.

Beispiel 8

Ein bei 1600°C hergestelltes Pulver mit einer spezifischen Oberfläche von 21,9 m²/g und einem Sauerstoffgehalt von 450 ppm wurde mit Zusätzen von 1 Gew.-% SiB₆ und 1 Gew.-% C als Polyphenylen unter Benzolzugabe vermischt, anschliessend getrocknet und isostatisch mit einem Druck von 3 kbar zu einer Dichte von 1,58 g/cm³, entsprechend 49,2% relativer Dichte, verpresst. Die Sinterung erfolgte mit einer Aufheizgeschwindigkeit von 1450°C/h unter Argonatmosphäre bis zu einer Temperatur von 2100°C; die Haltezeit bei dieser Temperatur betrug 16 min. Die erreichte Dichte betrug 2,92 g/cm³, entsprechend 91,0% relativer Dichte.

**Patentansprüche**

1. Verfahren zur Herstellung von Siliciumcarbidpulver für die Herstellung von sinterkeramischen Körpern, das Sinterzusätze enthält, bei welchem Alkylsilane in den Gaszustand überführt und anschliessend zusammen mit einem Trägergas, ausgewählt aus einer Edelgase, Stickstoff, Wasserstoff sowie Mischungen dieser Gase umfassenden Gruppe, in einem Strömungsreaktor gespalten werden, dadurch gekennzeichnet, dass zur Bildung von SiC-Pulver im Submikronbereich Alkylsilane der allgemeinen Formel $R_nSiH_{4-n}$, in welcher R eine Alkylgruppe mit 1 bis 4 Kohlenstoffatomen und n eine ganze Zahl von 1 – 4 bedeuten, bei einer Temperatur im Bereich von 450°C bis zu einer Temperatur, wie sie im Plasmabrenner auftritt, thermisch zersetzt werden, das gebildete Pulver in einer Abscheidekammer gesammelt und mit wenigstens einem der Stoffe $SiB_4$, $SiB_6$, $B_{12}$ (C, Si, B)$_3$ und $B_{14}$ Si als Sinterzusatz, ggf. zusammen mit B bzw. $B_4C$ als weiterer Sinterzusatz vermischt wird.

2. Verfahren nach Anspruch 1, dadurch gekennzeichnet, dass die Alkylsilane in einem Temperaturbereich von 1000 bis 2000°C thermisch zersetzt werden.

3. Verfahren nach Anspruch 1, dadurch gekennzeichnet, dass die im Temperaturbereich von 450 bis 1500°C gebildeten Pulver bei Temperaturen von 1400 bis 2000°C in einer inerten Atmosphäre oder im Vakuum nachgeglüht werden.

4. Verfahren nach Anspruch 1, dadurch gekennzeichnet, dass die im Temperaturbereich von 1000 bis 1500°C gebildeten Pulver einer nachträglichen Glühbehandlung bei einer oberhalb der Schmelztemperatur von Silicium liegenden Temperatur nachgeglüht werden.

**Claims**

1. A process for producing silicon carbide powder for use in the production of sintered ceramic bodies which contains sintering additives, comprising the steps of transforming alkyl silane into the gaseous state and then cleaving it together whith a carrier gas selected from the group consisting of noble gases, nitrogen, hydrogen and mixtures of said gases in a flow reactor, characterized in that forforming SiC powder in the submicron range, alkyl silanes of the general formula $R_nSiH_{4-n}$, wherein R means an alkyl group having 1 to 4 carbon atoms and n means an integer from 1 to 4, are thermally decomposed at a temperature ranging from 450°C to a temperature which occurs in the plasma burner, and the resultant powder is collected in a separation chamber and mixed with at least one of $SiB_4$, $SiB_6$, $B_{12}$ (C, Si,B)$_3$ and $B_{14}$Si as sintering additive, optionally together with B or $B_4C$ as a further sintering additive.

2. A process according to claim 1, characterized in that the alkyl silanes are thermally decomposed in a temperature range from 1000 to 2000°C.

3. A process according to claim 1, characterized in that the powders formed in the temperature range from 450 to 1500°C are subjected to a subsequent annealing operation at temperatures from 1400 to 2000°C in an inert atmosphere or in a vacuum.

4. A process according to claim 1, characterized in that the powders formed in the temperature range from 1000 to 1500°C are subjected to a subsequent annealing operation at a temperature above the melting temperature of silicon.

**Revendications**

1. Procédé pour la fabrication de carbure de silicium en poudre destiné à la réalisation de pièces céramiques frittées, qui contient des additifs de frittage, procédé dans lequel des silanes alcoylés sont amenés à l'état gazeux et ensuite dissociés dans un vase de réaction à écoulement en présence d'un gaz porteur choisi dans un groupe comprenant des gaz rares, l'azote, l'hydrogène ainsi que des mélanges de ces gaz, caractérisé en ce que, en vue de l'obtention de SiC en poudre dont la grosseur de grain est inférieure au micron, des silanes alcoylés de la formule générale $R_nSiH_{4-n}$, dans laquelle R représente un groupe alcoyle renfermant 1 à 4 atomes de carbone et n est un nombre entier de 1 à 4, sont décomposés thermiquement à une température comprise entre 450°C et une température telle qu'elle se produit au chalumeau à plasma, la poudre ainsi formée est recueillie dans une chambre de séparation et est mélangée avec au moins l'un des composés $SiB_4$, $SiB_6$, $B_{12}$ (C, Si, B)$_3$ et $B_{14}$Si servant d'additif de frittage et ce, le cas échéant, conjointement avec du B ou $B_4C$ servant d'additif de frittage supplémentaire.

2. Procédé selon la revendication 1, charactérisé en ce que les silanes alcoylés sont décomposés thermiquement dans un intervalle de température de 1000 à 2000°C.

3. Procédé selon la revendication 1, caractérisé en ce que les poudres formées dans l'intervalle de température de 450 à 1500°C sont soumises à un traitement thermique ultérieur à des températures de 1400 à 2000°C sous une atmosphère inerte.

4. Procédé selon la revendication 1, caractérisé en ce que les poudres formées dans l'intervalle de température de 1000 à 1500°C sont soumises à un traitement thermique ultérieur à une température supérieure à la température de fusion du silicium.

19

9  6

1
2
3
4

5

7

8

13  14  15  15  18  16  17

10

11

12

0006921